# DEMANDE DE BREVET EUROPEEN

(11) **EP 1 283 243 A1**
(43) Date de publication de la demande: **12.02.2003**
(21) Numéro de dépôt: 02291769.4
(22) Date de dépôt: 12.07.2002
(51) Int. Cl.: C08L 23/10

(54) **Composition à base de polypropylène et d'un copolymère éthylène/acrylate d'alkyle**

(30) Priorité: 07.08.2001 FR 0110539
(71) Demandeur: Atofina, 92800 Puteaux (FR)
(72) Inventeur: Bouilloux, Alain, 27300 Bernay (FR); Lacroix, Christophe, 27700 Harquency (FR)

(57) **Abrégé**

L'invention est relative à une composition à base de polypropylène, homo ou copolymère, et d'un modifiant choc comprenant un copolymère éthylène/acrylate d'alkyle. Cette composition comprend sensiblement entre 1 et 40 % en poids de modifiant choc et elle peut comprendre un copolymère à base d'éthylène pris dans le groupe comprenant les copolymères éthylène/ester acrylique, l'acétate de vinyle, le polyéthylène obtenu par catalyse métallocène ou PEm et le polyéthylène linéaire basse densité ou LLDPE.

Le PP ainsi modifié est utile pour fabriquer des pièces automobiles de type pare choc ou tableaux de bord, par exemple, nécessitant une bonne résistance thermomécanique sur une large plage de températures.

## Description

La présente invention est relative à une composition de polypropylène (PP) homo ou copolymère et de copolymère éthylène/acrylate d'alkyle avec un groupement alkyle linéaire ou ramifié comprenant un nombre de carbone supérieur ou égal à 6, de préférence égal à 8, cette composition jouant un rôle de modifiant choc du polypropylène. L'acrylate d'alkyle est de préférence l'acrylate de 2-éthylhexyle ou l'acrylate de n-octyle voir un mélange d'acrylate de 2-éthylhexyle et d'octyle. Cette composition de PP modifié choc présente de bonnes propriétés de résistance aux chocs, notamment à basses températures, par rapport à des PP non modifiés ou à des PP modifiés par des copolymères éthylène/acrylate de méthyle (EMA) ou éthylène/acrylate de butyle (EBA). Cette composition peut éventuellement comprendre des charges renforçantes.

Ces compositions sont utiles pour fabriquer des pièces devant présenter une bonne résistance aux chocs à température ambiante ainsi qu'à basses températures. Ces compositions peuvent servir à fabriquer, entre autre, des pare-chocs, des tubes, des plaques, des planches de bord de véhicules automobiles, des bâches ainsi que des membranes, des feuilles ou des films pour l'habillage intérieur automobile.

Le document US 5 272 210 décrit une composition comprenant un copolymère propylène/éthylène et un copolymère éthylène/acrylate d'alkyle. L'acrylate d'alkyle peut être l'acrylate d'éthyle (EEA), l'acrylate de méthyle (EMA) et l'acrylate de butyle (EBA), ces deux derniers esters étant préférés. Les exemples donnés dans ce brevet sont réalisés avec l'acrylate de méthyle. Les films réalisés à l'aide de ces compositions ont de bonnes propriétés de scellage et de flexibilité à basses températures.

Le document US 3 433 573 est relatif à une composition comprenant un mélange de polypropylène majoritaire en propylène et d'un copolymère éthylène/acétate de vinyle (EVA) pour fabriquer des feuilles, des films et des articles moulés avec une amélioration de la coloration et des caractéristiques à basses températures telles que la flexibilité et la résistance.

Le document US 3 555 110 divulgue des compositions de polymères à blocs propylène et éthylène ou à blocs propylène et 1-butène mélangés à des copolymères éthylène/acrylate d'éthyle (EEA) ou à des copolymères éthylène/vinyle acétate (EVA), ces compositions présentant des propriétés chocs améliorées à basses températures.

Le polypropylène homopolymère n'a pas une bonne résistance aux chocs. Les copolymères éthylène/propylène statistique ou à blocs éthyléniques et propyléniques présentent de bien meilleures résistances aux chocs grâce à la partie EPR générée durant la phase de polymérisation. Ces produits présentent toutefois des limitations car il n'est pas toujours possible de synthétiser in-situ les quantités nécessaires d'EPR (éthylène propylène rubber). Ces copolymères blocs sans partie EPR s'avèrent avoir une faible résistance aux chocs dans des applications à basses températures.

Les copolymères de type éthylène/ester acrylique, éthylène/acrylate de méthyle et éthylène/acrylate de butyle (EMA, EBA) sont des modifiants choc de PP mais ne permettent pas d'obtenir des valeurs de résistances aux chocs comparables aux valeurs des EPR ou des EPDM.

Nous avons maintenant trouvé un modifiant choc du polypropylène à base d'éthylène et d'acrylate d'alkyle, de préférence l'acrylate de 2-éthylhexyle, abrégé par AE2H dans la suite du texte, ou l'acrylate de n-octyle, permettant d'obtenir des valeurs de résistance aux chocs supérieures à celles obtenues avec les copolymères classiques de type EMA ou EBA et notamment une bonne résistance aux chocs à basses températures.

L'invention a pour objet une composition comprenant du polypropylène (A), homo ou copolymère, et un copolymère éthylène/acrylate d'alkyle en tant que modifiant choc avec un groupement alkyle, linéaire ou ramifié, comprenant un nombre de carbone supérieur ou égal à 6, de préférence supérieur ou égal à 7.

Selon un mode de réalisation de la composition, l'acrylate d'alkyle est l'acrylate de 2-éthylhexyle, l'acrylate de n-octyle ou leur mélange.

Selon un mode de réalisation de la composition, celle-ci comprend au moins un polyéthylène (B) pris dans le groupe comprenant le LDPE, le HDPE, le LLDPE, le VLDPE, le polyéthylène obtenu par catalyse métallocène, les élastomères EPR et EPDM, les mélanges polyéthylène et EPR ou EPDM, les copolymères éthylène/(méth)acrylate d'alkyle et éthylène/acétate de vinyle. Selon un mode de réalisation de la composition, les copolymères éthylène/acétate de vinyle sont des terpolymères éthylène/acétate de vinyle/anhydride maléique.

Selon un mode de réalisation de la composition, les copolymères éthylène/(méth)acrylate d'alkyle sont des terpolymères éthylène/(méth)acrylate d'alkyle/anhydride maléique, des terpolymères éthylène/(méth)acrylate d'alkyle/méthacrylate de glycidyle ou des terpolymères éthylène/(méth)acrylate d'alkyle/acide (méth)acrylique.

Selon un mode de réalisation de la composition, celle-ci comprend entre environ 1 et 60 %, de préférence 1 à 40 % en poids de copolymère éthylène/(méth)acrylate d'alkyle.

Selon un mode de réalisation de la composition, celle-ci comprend au moins un additif pris dans le groupe comprenant des stabilisants, des antioxydants, des plastifiants, des lubrifiants, du noir de carbone et des agents colorants.

Selon un mode de réalisation de la composition, celle-ci comprend au moins une charge.

L'invention a également pour objet l'utilisation de la composition précédemment décrite pour fabriquer des feuilles, des membranes, des films, des bâches, des planches de bord automobiles, des tubes, des plaques et des pare-chocs nécessitant une bonne résistance thermomécanique sur une large plage de températures.

S'agissant du polypropylène (A), c'est un homo ou co-polymère.

A titre de comonomères, on peut citer :
- les alpha-oléfines, avantageusement celles ayant de 3 à 30 atomes de carbone.
   Des exemples d'alpha-oléfines ayant de 3 à 30 atomes de carbone comme comonomères éventuels comprennent l'éthylène, 1-butène, 1-pentène, 3-méthyl-1-butène, 4-méthyl-1-pentène, 4,4-diméthyl-1-pentène, 3-méthyl-1-pentène, 4-méthyl-1-hexène, 5-méthyl-1-hexène, 1-hexène, 1-heptène, 1-octène, 1-décène, 1-dodécène, 1-tétradécène, 1-hexadécène, 1-octadécène, 1-eicocène, 1-dococène, 1-tétracocène, 1-hexacocène, 1-octacocène, 1-triacontène, styrène, allylbenzène, allylcyclohexane, allylcyclopentane et vinylcyclohexane . Ces alpha-oléfines peuvent être utilisées seules ou en mélange de deux ou de plus de deux.
- les diènes, tel que par exemple le 1,4-hexadiène.

Le polypropylène (A) peut aussi être un co-polymère à blocs propylène et alpha-oléfine. En général, les polymères séquencés à blocs sont préparés par polymérisation d'une alpha-oléfine puis l'ajout dans le mélange réactionnel d'une autre alpha-oléfine, l'une des deux alpha-oléfine étant le propylène. Dans le cas de polypropylène copolymère à blocs propylène et éthylène, la polymérisation conduit à l'obtention de polymères blocs contenant des segments d'unités propylène ou segments polypropylène et des segments d'unités éthylène ou segments polyéthylène. Ces polymères séquencés à blocs ont en générale seulement deux segments dans leur chaîne et consistent en un segment polypropylène d'environ 50 % à 99% en poids et un segment polyalpha-oléfine, autre que le polypropylène, d'environ 50 % à 1% en poids.

Les PP obtenus par catalyse Ziegler-Natta ainsi que les PP obtenus par catalyse métallocène sont concernés par la présente invention. Concernant les PP obtenus par catalyse métallocène, on peut citer les PP syndiotactique et isotactique.

De bonnes propriétés chocs à basses températures sont obtenues avec des quantités relativement faibles de copolymère éthylène/acrylate d'alkyle avec un groupement alkyle linéaire ou ramifié comprenant un nombre de carbone > ou = à 6, de préférence > ou = à 7 dans les compositions selon l'invention.

Les compositions selon l'invention comprennent environ 1 à 60 %, de préférence 1 à 40 % en poids de copolymère éthylène/acrylate d'alkyle et entre environ 99 à 35% en poids de polypropylène (A) homo ou copolymère et éventuellement au moins un autre polymère (B), le total des pourcentages faisant 100 %.

Le copolymère éthylène/acrylate d'alkyle comprend entre environ 55 à 99% en poids d'éthylène et entre environ 45 à 1% en poids d'acrylate d'alkyle, le total des pourcentages faisant 100 %.

Les compositions selon l'invention peuvent comprendre en plus, du polypropylène (A) et du copolymère éthylène/acrylate d'alkyle, au moins un autre polymère (B) choisi parmi les polyéthylènes homo- ou co-polymères.

A titre de comonomères du polyéthylène (B), on peut citer :
- les alpha-oléfines, avantageusement celles ayant de 3 à 30 atomes de carbone. Des exemples d'alpha-oléfines ayant 3 à 30 atomes de carbone comme comonomères éventuels comprennent le propylène, 1-butène, 1-pentène, 3-méthyl-1-butène, 1-hexène, 4-méthyl-1-pentène, 3-méthyl-1-pentène, 1-octène, 1-décène, 1-dodécène, 1-tétradécène, 1-hexadécène, 1-octadécène, 1-eicocène, 1-dococène, 1-tétracocène, 1-hexacocène, 1-octacocène, et 1-triacontène. Ces alpha-oléfines peuvent être utilisées seules ou en mélange de deux ou de plus de deux.
- les esters d'acides carboxyliques insaturés tels que par exemple les (méth)acrylates d'alkyle, les alkyles pouvant avoir jusqu'à 24 atomes de carbone. Des exemples d'acrylate ou méthacrylate d'alkyle sont notamment le méthacrylate de méthyle, l'acrylate de méthyle, le méthacrylate d'éthyle, l'acrylate d'éthyle, l'acrylate de n-butyle, l'acrylate d'isobutyle, l'acrylate de 2-éthylhexyle, le méthacrylate de glycidyle, l'acrylate de n-octyle.
- les esters vinyliques d'acides carboxyliques saturés tels que par exemple l'acétate ou le propionate de vinyle.
- les époxydes insaturés. Des exemples d'époxydes insaturés sont notamment les esters et éthers de glycidyle aliphatiques tels que l'allylglycidyléther, le vinylglycidyléther, le maléate et l'itaconate de glycidyle, l'acrylate et le méthacrylate de glycidyle, et les esters et éthers de glycidyle alicycliques tels que le 2-cyclohexène-1-glycidyléther, le cyclohexène-4,5-diglycidylcarboxylate, le cyclohexène-4-glycidyl carboxylate, le 5-norbornène-2-méthyl-2-glycidyl carboxylate et l'endocisbicyclo(2,2,1)-5-heptène-2,3-diglycidyl dicarboxylate.
- les acides carboxyliques insaturés, leurs sels, leurs anhydrides. Des exemples d'anhydrides d'acide dicarboxylique insaturé sont notamment l'anhydride maléique, l'anhydride itaconique, l'anhydride citraconique, l'anhydride tétrahydrophtalique.
- les diènes tels que par exemple le 1,4-hexadiène.

Le copolymère de l'éthylène (B) peut comprendre plusieurs comonomères.

Avantageusement le polymère (B), qui peut être un mélange de plusieurs polymères, comprend au moins 50 % et de préférence 75% (en moles) d'éthylène. La densité de (B) peut être comprise entre 0,86 et 0,98 g/cm³. Le MFI (indice de fluidité à l'état fondu à 190°C sous 2,16 kg) est compris avantageusement entre 1 et 1000 g/10 min.

A titre d'exemple de polymères (B) on peut citer :
- le polyéthylène basse densité (LDPE), le polyéthylène haute densité (HDPE), le polyéthylène linéaire basse densité (LLDPE), le polyéthylène très basse densité (VLDPE) ;
- le polyéthylène obtenu par catalyse métallocène, c'est-à-dire les polymères obtenus par copolymérisation d'éthylène et d'alphaoléfine telle que propylène, butène, héxène ou octène en présence d'un catalyseur monosite constitué généralement d'un atome de zirconium ou de titane et de deux molécules cycliques alkyles liées au métal ;
- les élastomères EPR (éthylène/propylène rubber), les élastomères EPDM (éthylène/propylène diène), les mélanges de polyéthylène avec un EPR ou un EPDM;
- les copolymères éthylène/(méth)acrylate d'alkyle pouvant contenir jusqu'à 60 % en poids de (méth)acrylate d'alkyle et de préférence 2 à 40 % ;
- les terpolymères éthylène/(méth)acrylate d'alkyle/anhydride maléique ou éthylène/(méth)acrylate d'alkyle/méthacrylate de glycidyle ou éthylène/(méth) acrylate d'alkyle/acide (méth)acrylique pouvant contenir de 0 à 60 % en poids de (méth)acrylate d'alkyle et de préférence de 2 à 40 %, la quantité d'anhydride maléique ou de méthacrylate de glycidyle ou d'acide (méth)acrylique (selon le terpolymère choisi) étant comprise entre 0 et 10 % et de préférence entre 0,2 et 6% en poids, les terpolymères éthylène/acétate de vinyle/anhydride maléique, les proportions en (méth)acrylate d'alkyle et en anhydride maléique étant dans ce cas les mêmes que pour le copolymère éthylène/(méth)acrylate d'alkyle/anhydride maléique précédent.
- les copolymères éthylène/méthacrylate de glycidyle, éthylène/acide acrylique et éthylène/acide méthacrylique.

Les compositions selon l'invention peuvent également contenir des additifs variés tels que des stabilisants, des antioxydants, des plastifiants, des lubrifiants, du noir de carbone ou des agents colorants normalement utilisés dans les polyoléfines. Elles peuvent également contenir des charges telles que du talc, du mica, du kaolin, du wollastonite, des fibres ou billes de verre. De tels additifs et/ou charges peuvent être ajoutés à la composition selon l'invention dans des quantités suffisantes et nécessaires connues de l'homme de l'art, sans modifier les propriétés chocs du mélange ainsi obtenu.

L'invention va maintenant être illustrée par des exemples inclus dans la présente demande afin de l'illustrer et non dans limiter la portée.

Dans la suite du texte, les différents types de rupture sont abrégés par RT, RP, RI et RM correspondants à:
- **RT ou Rupture Totale :** Il y a Rupture Totale lorsque le barreau casse et que l'on obtient deux morceaux séparés en fin de test de choc CHARPY entaillé.
- **RP ou Rupture Partielle :** Il y a Rupture Partielle lorsque la propagation de la fissure sous l'entaille n'est pas totale. Elle s'arrête quelque part dans l'épaisseur de l'éprouvette et on conserve un barreau entier en fin de test de choc CHARPY entaillé.
- **RI ou Rupture Impossible :** Lorsqu'il n'y a pas de rupture, le barreau étant trop souple, on parle de Rupture Impossible.
- **RM ou Rupture Mixte :** On parle de rupture Mixte, lorsque au cours des tests de rupture menés sur des barreaux de même composition à une température donnée, on a rencontré deux des types de ruptures précédemment décrites. Par exemple, sur un même lot de barreaux un certain nombre ont subi une RT, tandis que les autres ont subi une RP.

L'abréviation MFI dans la suite du texte signifie Melt Flow Index, c'est à dire indice de fluidité à l'état fondu.

La résistance aux chocs est évaluée sur des barreaux injectés puis entaillés selon la méthode Charpy et suivant la norme ISO 179 :93-1eA à une température donnée (+23°C, 0°C, - 20°C, - 30°C ou - 40°C).

L'écart type a été évalué à partir de la mesure de la résistance au choc de 10 échantillons de même composition.

Les compositions des tableaux 1A, 1B, 2A et 2B ont été réalisées dans une extrudeuse double vis de type Werner Pfleiderer de diamètre 30 mm, la vitesse de rotation des vis étant de 300 tr/min, le débit de 20 kg/h et les températures matières de l'ordre de 220 à 230°C.

Les produits utilisés pour réaliser les compositions du **tableau 1A** et du **tableau 1B** sont les suivants :
- **PP** : PP de MFI = 11 g/10min avec un pourcentage d'éthylène = 9% en poids, soit un taux d'EPR (50/50)=18% en poids.
- **EMA** : copolymère éthylène/acrylate de méthyle avec 24% en poids d'acrylate de méthyle (AME) et un MFI de 0,5 g/10min, mesuré à 190°C sous 2,16 kg.
- **AE2H** : copolymère éthylène/acrylate de 2-éthylhéxyle avec 32% en poids d'acrylate de 2-éthylhéxyle et un MFI de 2 g/10min, mesuré à 190°C sous 2,16 kg.
- **PEm** : PE métallocène commercialisé par Dow Chemical sous le nom Engage8842®.

La résistance au choc des exemples Ex1 et Ex2 selon l'invention est significativement améliorée, en tenant compte de l'écart-type, par rapport aux comparatif C1 et C4 réalisés à l'aide de PP sans modifiant choc.

Les produits utilisés pour réaliser les compositions du **tableau 2A** et du **tableau 2B** sont les suivants :
- **PP :** PP de MFI = 11 g/10min avec un pourcentage d'éthylène = 9 % en poids, soit un taux d'EPR (50/50)=18 % en poids.
- **EMA** : Copolymère éthylène/acrylate de méthyle avec 24% en poids d'acrylate de méthyle (AME) et un MFI de 0,5 g/10min, mesuré à 190°C sous 2,16 kg.
- **EVA** : copolymère éthylène/acétate de vinyle avec 28% en poids d'acétate de vinyle et un MFI de 4 g/10min, mesuré à 190°C sous 2,16 kg.
- **EBA** : Copolymère éthylène/acrylate de butyle avec 30 % en poids d'acrylate de butyle (ABU) et un MFI de 2 g/10min, mesuré à 190°C sous 2,16 kg.
- **AE2H** : copolymère éthylène/acrylate de 2-éthylhéxyle avec 35% en poids d'acrylate de 2-éthylhéxyle et un MFI de 2 g/10min, mesuré à 190°C sous 2,16 kg.
- **PEm** : PE métallocène commercialisé par Dow Chemical, utilisé précédemment.

Les tableaux 2A et 2B montrent clairement que le remplacement des modifiants classiques de type copolymère EMA ou EBA par un copolymère AE2H dans une composition de PP améliore les performances de résistance au choc. En effet, on passe de valeur de choc situées entre 11,7 kj/m² (C7) et 19,8 kj/m² (C8) avec une rupture totale à une valeur de choc d'environ 53 kj/m² (Ex3 et Ex4) avec une rupture partielle et ce à +23°C. Les performances de résistance au choc du PP modifié par l'AE2H, selon l'invention, sont comparables à celles des compositions de PP modifiées par du PEm.

On constate également, au vu des résultats de résistance au choc de C9 et Ex4 que le PP modifié selon l'invention garde de bonnes propriétés de choc même s'il est en combinaison avec un autre modifiant tel que l'EVA.

Les compositions du **tableau 3** et du **tableau 4** ont été extrudées dans une extrudeuse double vis de type Werner Pfleiderer de diamètre 40 mm. La vitesse de rotation des vis est de 250tr/min, le débit de 80kg/h et les températures matières de l'ordre de 220-230°C.

Les produits utilisés pour réaliser les compositions des tableaux 3 et 4 sont les suivants :
- **PP** : PP homopolymère avec un MFI de 12 g/10min, mesuré à 230°C sous 2,16 kg.
- **EMA** : Copolymère éthylène/acrylate de méthyle avec 24% en poids d'acrylate de méthyle (AME) et un MFI de 0,5, mesuré à 190°C sous 2,16 kg.
- **AE2H** : copolymère éthylène/acrylate de 2-éthylhéxyle avec 35% en poids d'acrylate de 2-éthylhéxyle et un MFI de 2 g/10min, mesuré à 190°C sous 2,16 kg.
- **PEm** : PE métallocène commercialisé par Dow Chemical utilisé précédemment.
- **EBA** : Copolymère éthylène/acrylate de butyle avec 30 % en poids d'acrylate de butyle (ABU) et un MFI de 2 g/10min, mesuré à 190°C sous 2,16kg.
- **EVA** : copolymère éthylène/acétate de vinyle avec 28% en poids d'acétate de vinyle et un MFI de 4 g/10min, mesuré à 190°C sous 2,16 kg.

Dans le Tableau 3, on constate que l'Ex7 (PP+AE2H), selon l'invention, donne de meilleurs résultats de Choc Charpy que les comparatifs C18 (PP) et C19 (PP + EMA).

Dans le Tableau 4, les résultats de choc Charpy des exemples Ex8 et Ex9, selon l'invention, comprenant dans leur composition PP+AE2H, sont améliorés par rapport aux résultats de choc Charpy des comparatifs C21, C22, C23 et C24 ne comprenant pas d'AE2H. D'autre part, on obtient des résultats sensiblement meilleurs pour l'Ex9 comprenant PP+AE2H+EVA par rapport à l'Ex8.

Les exemples des tableaux 3 et 4 ont des propriétés choc meilleures que celles des comparatifs correspondants. Toutefois, on peut constater qu'avec un PP homopolymère les résultats sont moins flagrants qu'avec les PP utilisés pour les exemples des tableaux précédents.

Les compositions du **tableau 5A** et du **tableau 5B** ont été extrudées dans une extrudeuse double vis de type Werner Pfleiderer de diamètre 30 mm. La vitesse de rotation des vis est de 300 tr/min, le débit de 20 kg/h et les températures matières de l'ordre de 220-230°C.

Les tableaux 5A et 5B correspondent à des compositions comprenant 87% de PP et 13% de modifiant choc pour C27, C29, Ex10 et Ex11, ou comprenant 100 % de PP pour C26 et C28. Les PP utilisés dans les tableaux 5A et 5B sont différents, mais toutefois de performances choc très proches.

Les produits utilisés pour réaliser les compositions du tableau 5A et 5B sont les suivants :
- **PP** : PP de MFI = 11 g/10min avec un pourcentage d'éthylène = 9% en poids, soit un taux d'EPR (50/50)=18% en poids.
- **PEm** : PE métallocène commercialisé par Dow Chemical utilisé précédemment.
- **AE2H** : copolymère éthylène/acrylate de 2-éthylhéxyle avec 35% en poids d'acrylate de 2-éthylhéxyle et un MFI de 2 g/10min, mesuré à 190°C sous 2,16 kg.
- **LLDPE** : Polyéthylène linéaire basse densité de densité = 0,920 et de MFI = 0,9 mesuré à 190°C sous 2,16 kg.

Bien que réalisés avec des PP d'origine différentes, les comparatifs C27 et C29 indiquent les performances de base de ces formulations, elles sont très proches compte tenu des écarts types de mesure.

On constate que le remplacement du PEm dans C29 par le copolymère AE2H donnant l'Ex10 conduit à une amélioration du choc. En effet, le choc passe d'une valeur de 20 kJ/m² avec une RM à une valeur de 35 kJ/m² avec une RP et ce à +23°C.

D'autre part, si l'on remplace le LLDPE de C29 par du copolymère AE2H donnant l'Ex11, on constate que le choc est deux fois meilleur, passant d'une valeur de 20kJ/m² à une valeur de 44 kJ/m² et ce à +23°C.

Les compositions du tableau 6 sont extrudées dans une extrudeuse double vis de type Werner Pfeiderer de diamètre 40 mm. La vitesse de rotation des vis est de 250 tr/min, le débit de 40 kg/h et les températures matières de l'ordre de 220°C.

Les produits utilisés pour réaliser les compositions du **tableau 6** sont les suivants :
- **PP** : Copolymère à blocs PP et PE de MFI = 15 g/10min à 230°C, sous 2,16 kg.
- Talc : talc Steamic OOS®.
- **AE2H** : copolymère éthylène/acrylate de 2-éthylhéxyle avec 35% en poids d'acrylate de 2-éthylhéxyle et un MFI de 2 g/10min, mesuré à 190°C sous 2,16 kg.
- **EMA** : copolymère éthylène/acrylate de méthyle avec 29% en poids d'acrylate de méthyle (AME) et un MFI de 3 g/10min, mesuré à 190°C sous 2,16 kg.
- **EBA** : Copolymère éthylène/acrylate de butyle avec 30 % en poids d'acrylate de butyle (ABU) et de MFI = 2 g/10min à 190°C sous 2,16 kg.
- **PEm** : PE métallocène commercialisé par Dow Chemical utilisé précédemment.

Dans les compositions du tableau 6, le talc apporte la rigidité nécessaire au matériau alors que le modifiant choc permet d'augmenter la résistance aux chocs diminuée par le talc introduit dans la composition.

La résistance aux chocs des exemples Ex12, Ex13 et Ex14 comprenant respectivement en tant que modifant choc l'EMA, l'EBA et l'AE2H est meilleure que celle obtenue avec le PEm dans le comparatif C30.

Les compositions du tableau 7 sont extrudées dans une extrudeuse double vis de type Werner Pfeiderer de diamètre 30 mm. La vitesse de rotation est de 250 tr/min, le débit de 25 kg/h et les températures matières de l'ordre de 230°C.

Les produits utilisés pour réaliser les compositions du **tableau 7** sont les suivants :
- **PP(1)** : Copolymère à blocs PP et PE de MFI = 5 g/10min à 230°C, sous 2,16 kg.
- **PP(2)** : homopolymère de MFI = 12 g/10min à 230°C, sous 2,16 kg.
- **AE2H** : copolymère éthylène/acrylate de 2-éthylhéxyle avec 35% en poids d'acrylate de 2-éthylhéxyle et un MFI de 2 g/10min, mesuré à 190°C sous 2,16 kg.
- **EMA** : copolymère éthylène/acrylate de méthyle avec 29% en poids d'acrylate de méthyle (AME) et un MFI de 3 g/10min, mesuré à 190°C sous 2,16 kg.
- **LOTADER AX8900®** : terpolymère à base de méthacrylate de glycidyle (GMA)
- **LOTADER 4700**® : terpolymère à base d'anhydride maleique (MAH)
- **LUCALEN 3110®** de BASF: terpolymère éthylène/acrylate de butyle/acide acrylique dans un rapport respectivement de 88/8/4 et ayant un MFI = 6 à 8g/10min à 190°C sous 2,16 kg.

Le tableau 7 donnent des compositions comprenant du PP, un copolymère EMA ou AE2H en tant que modifiant choc et un mélange de trois composants (LOTADER AX8900®, LOTADER 4700® et LUCALEN 3110®) qui réticulent au cours du compoundage afin de maintenir le modifiant choc en phase dispersée dans la matrice PP et garantir ainsi la stabilité morphologique de la composition. D'autre part, on conserve également la bonne tenue thermique de la composition grâce au PP.

Dans les compositions des comparatifs C31 et C32 et des exemples Ex15 et Ex16 du tableau 7, les copolymères EMA et AE2H sont des assouplissants de la matrice de PP que ce dernier soit un copolymère à blocs (C31 et Ex15) ou un homopolymère (C32 et Ex16). Pour les deux types de PP (copolymère à blocs ou homopolymère), on constate un accroissement de la résistance aux chocs lorsqu'on remplace le copolymère EMA par le copolymère AE2H.

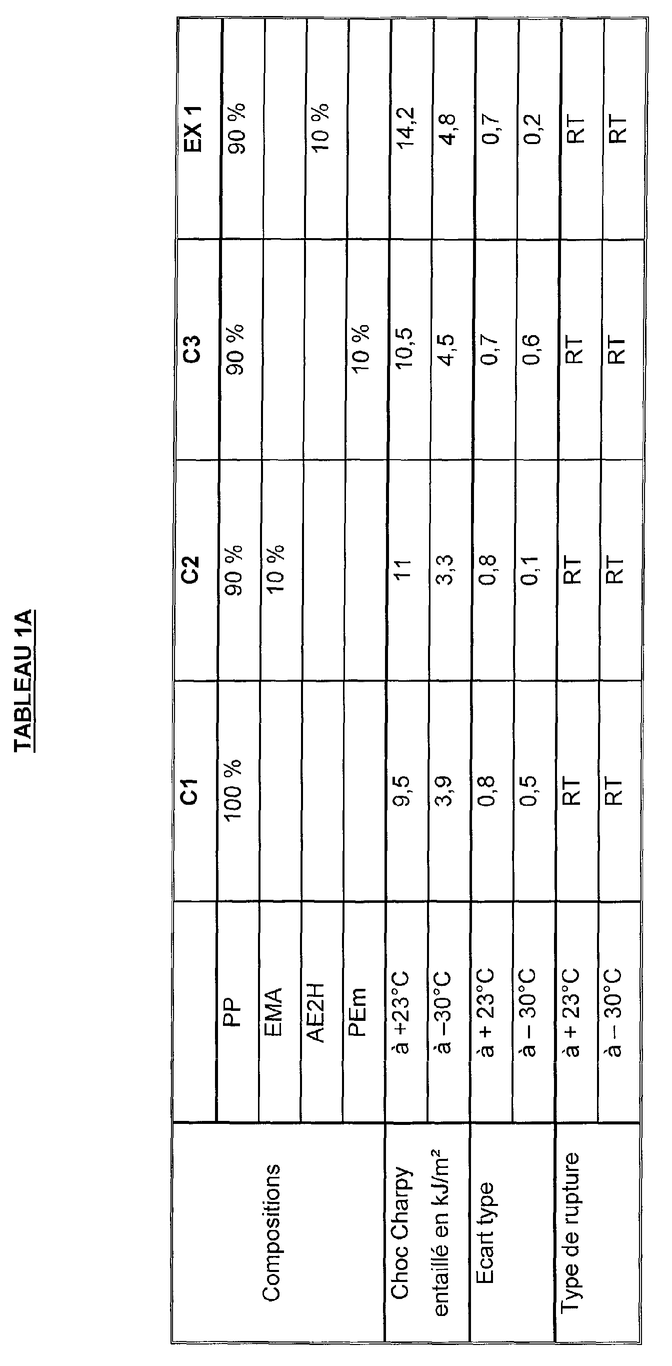

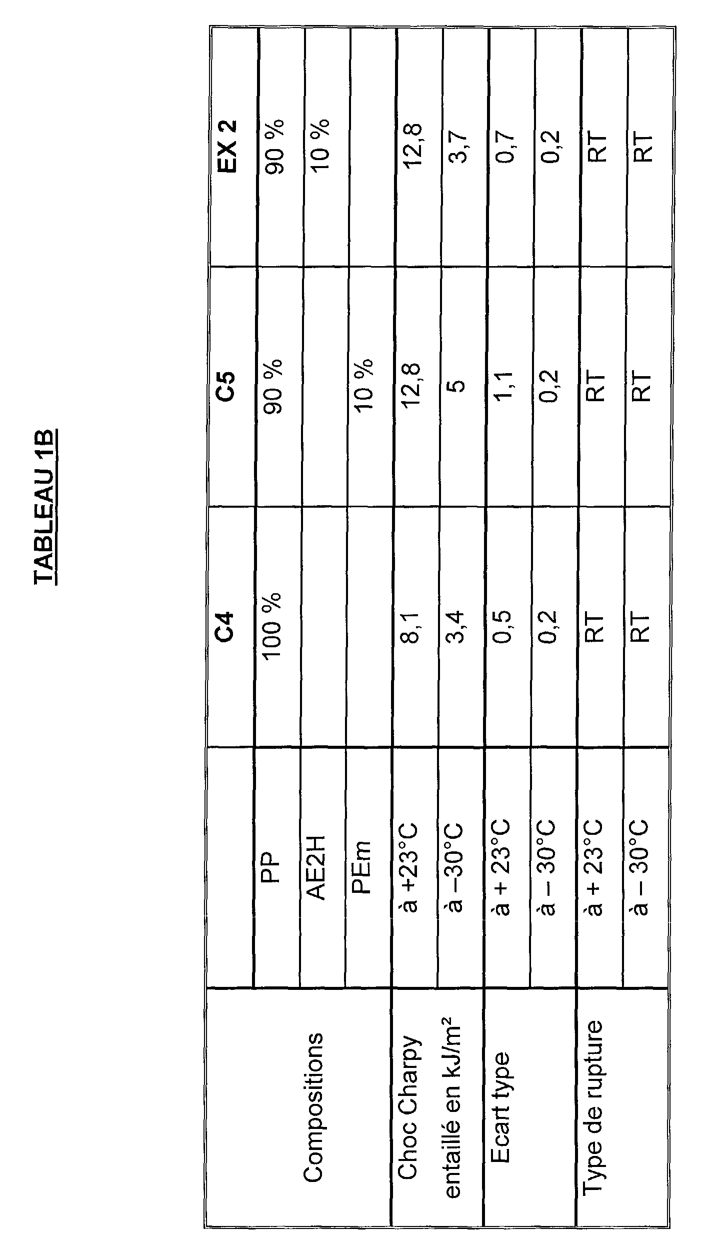

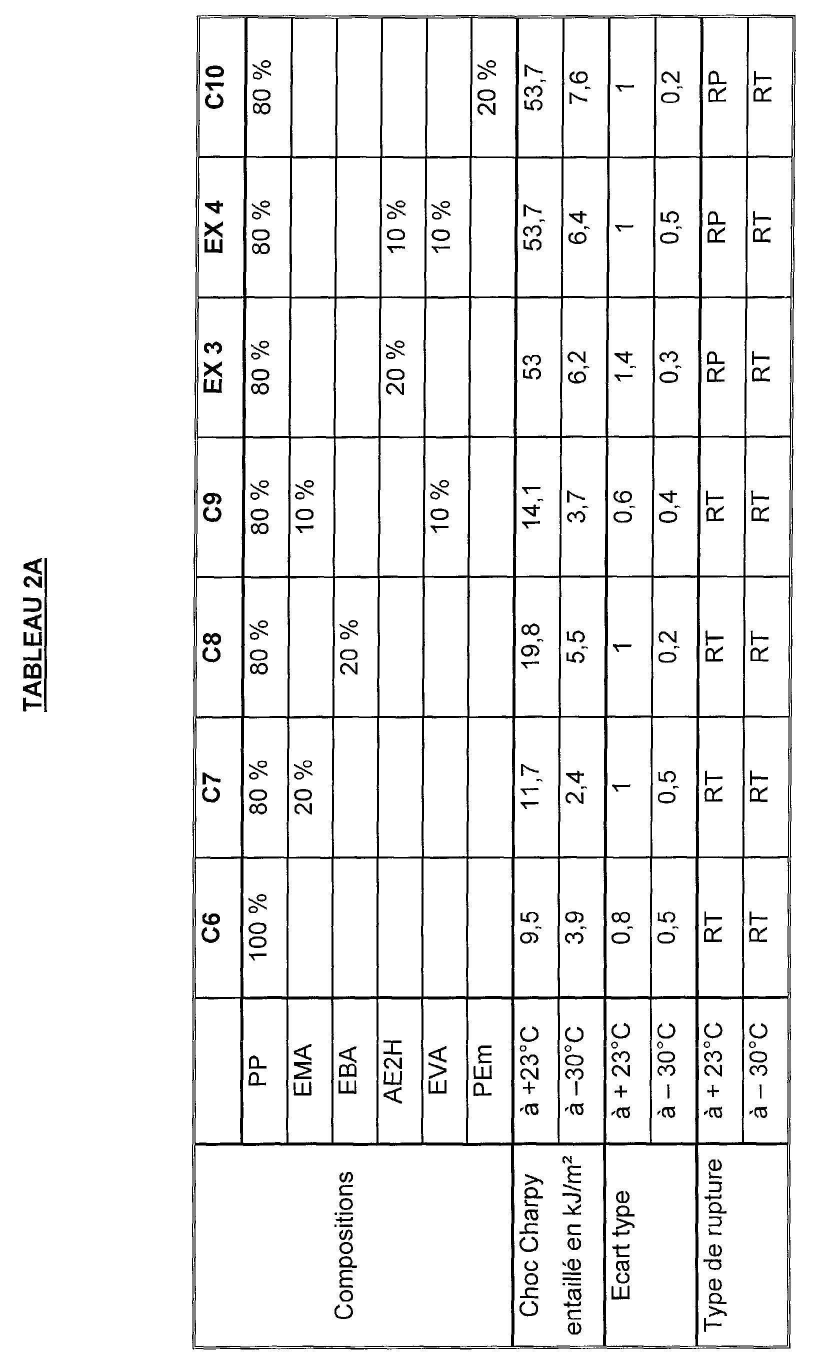

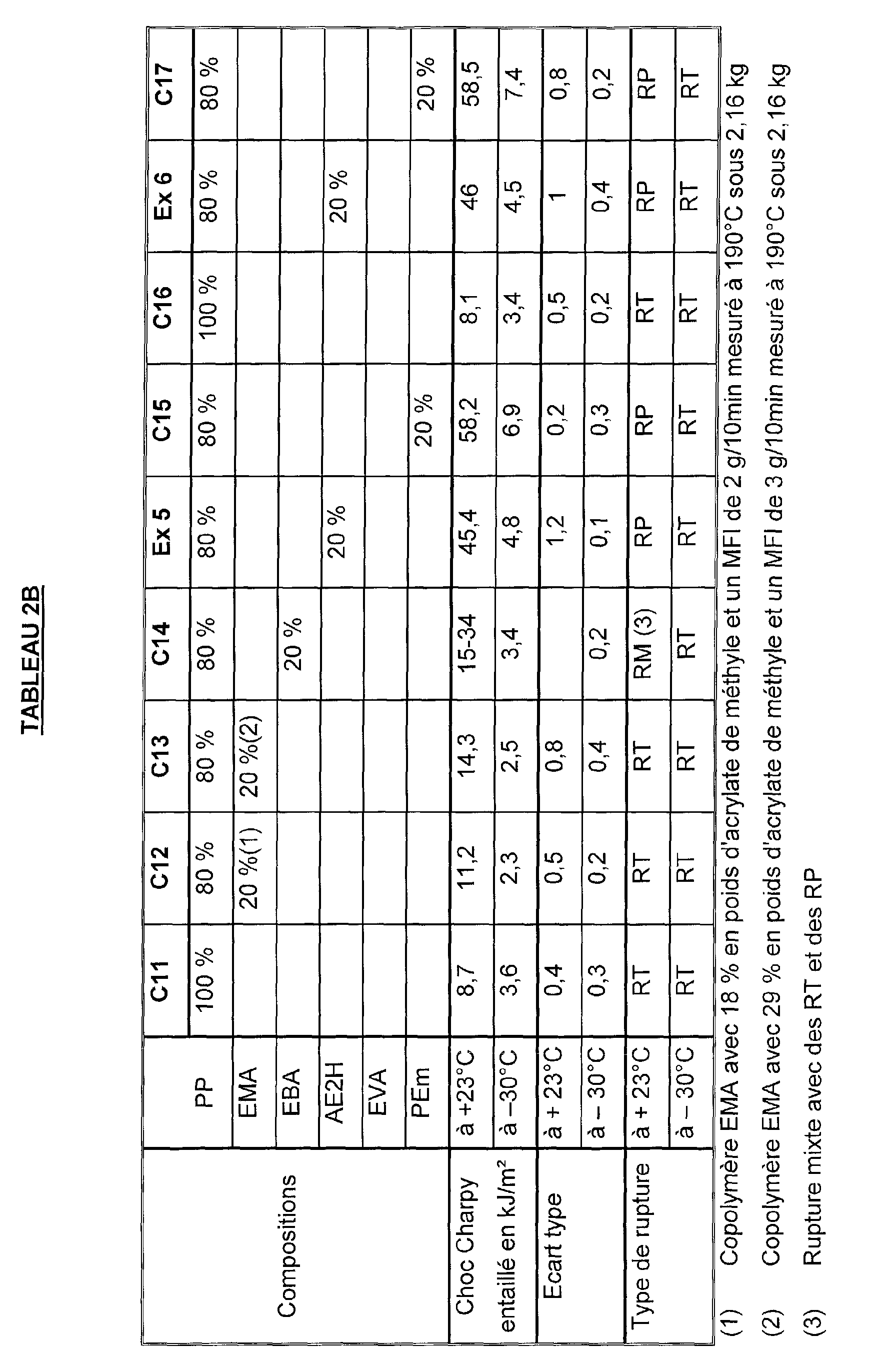

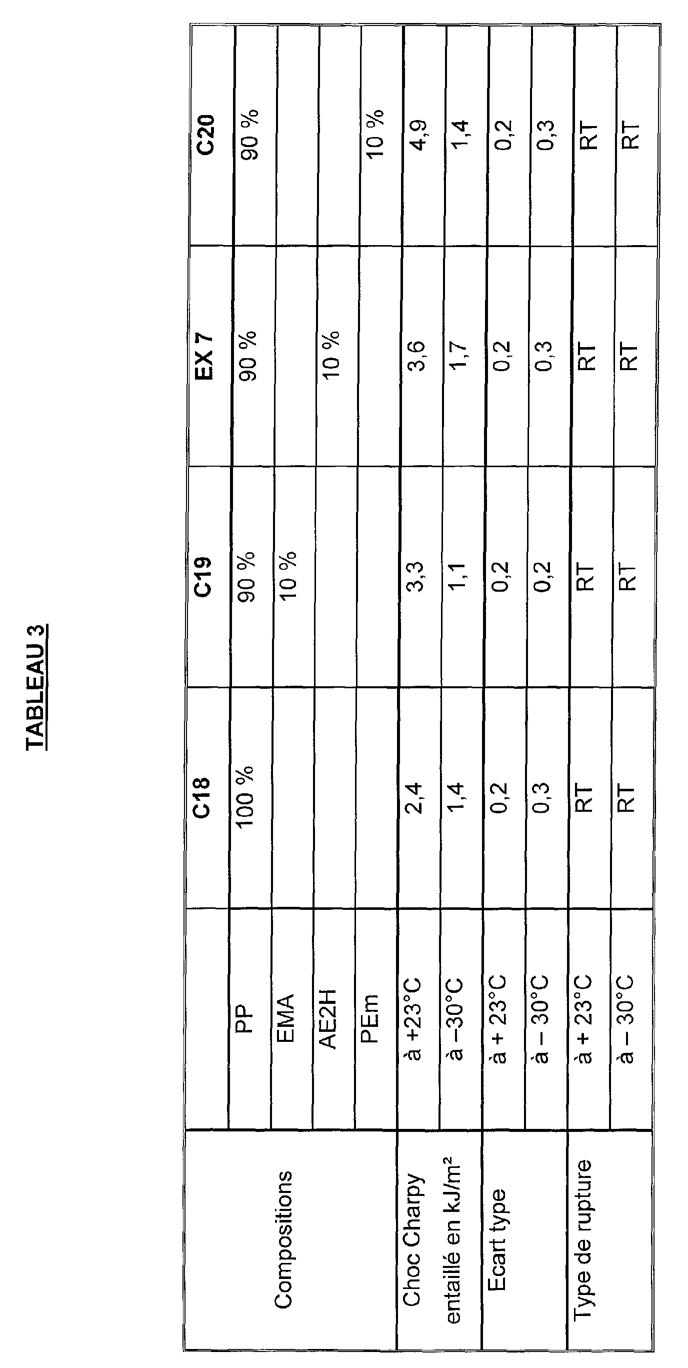

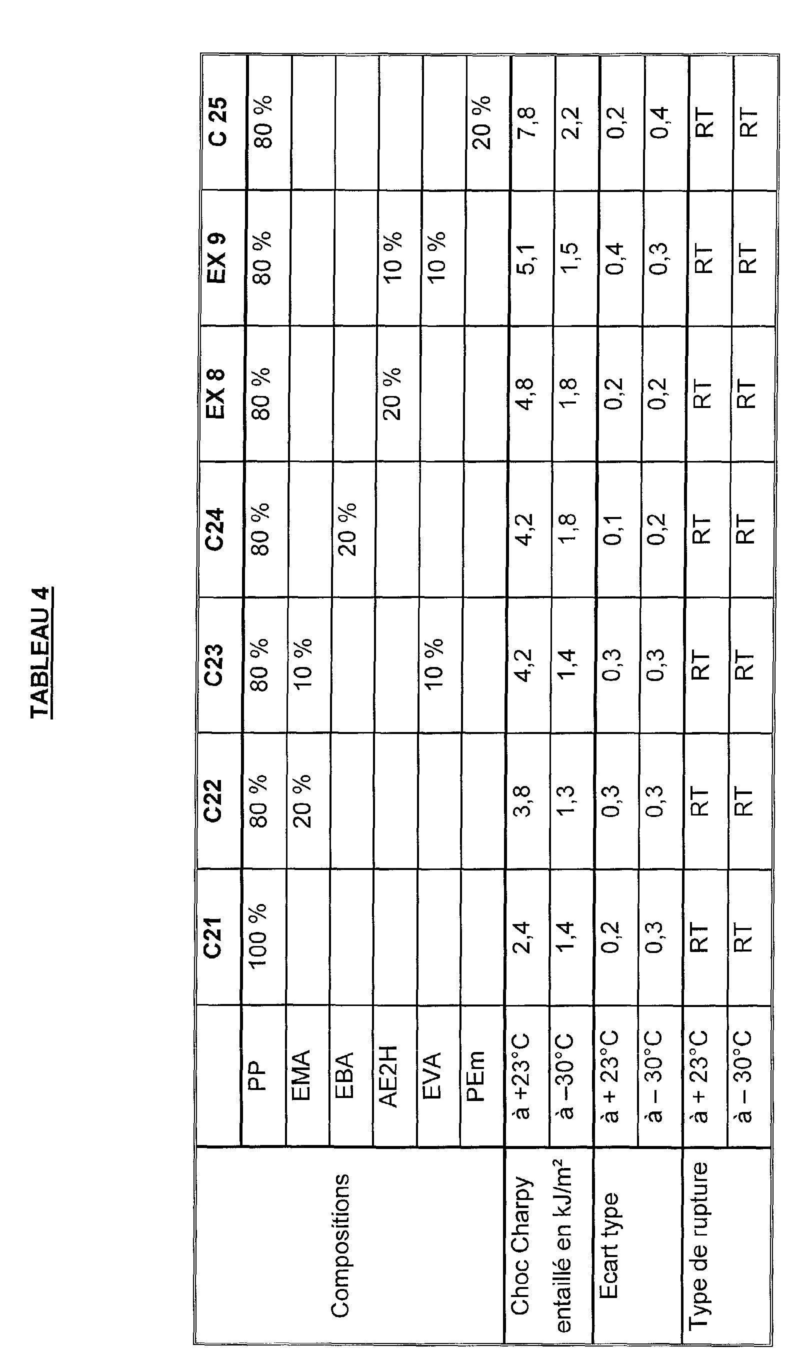

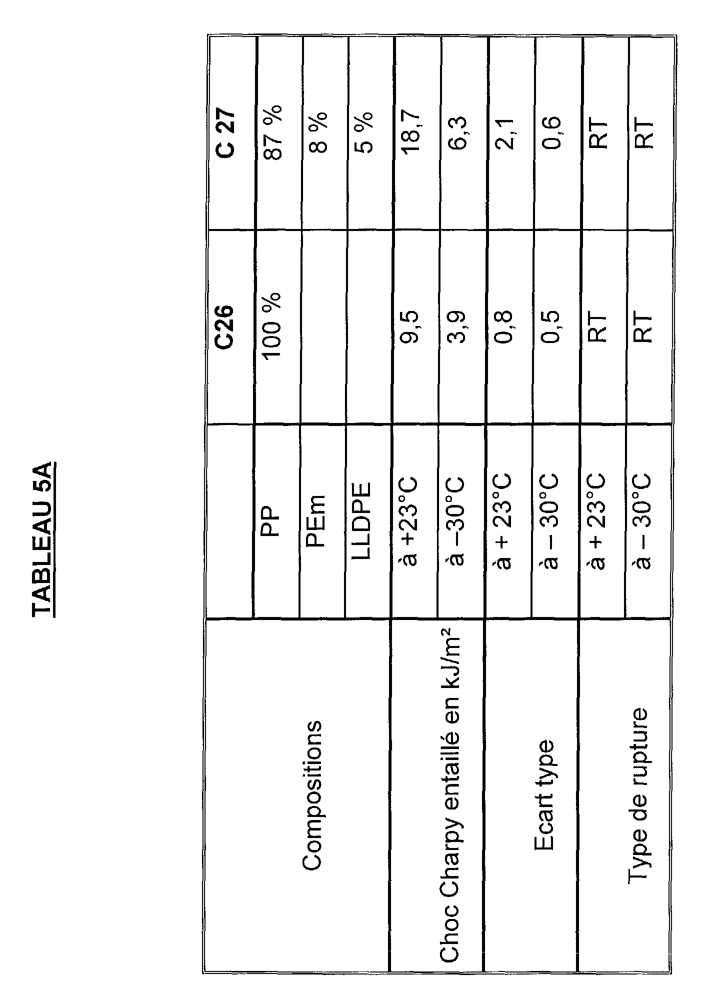

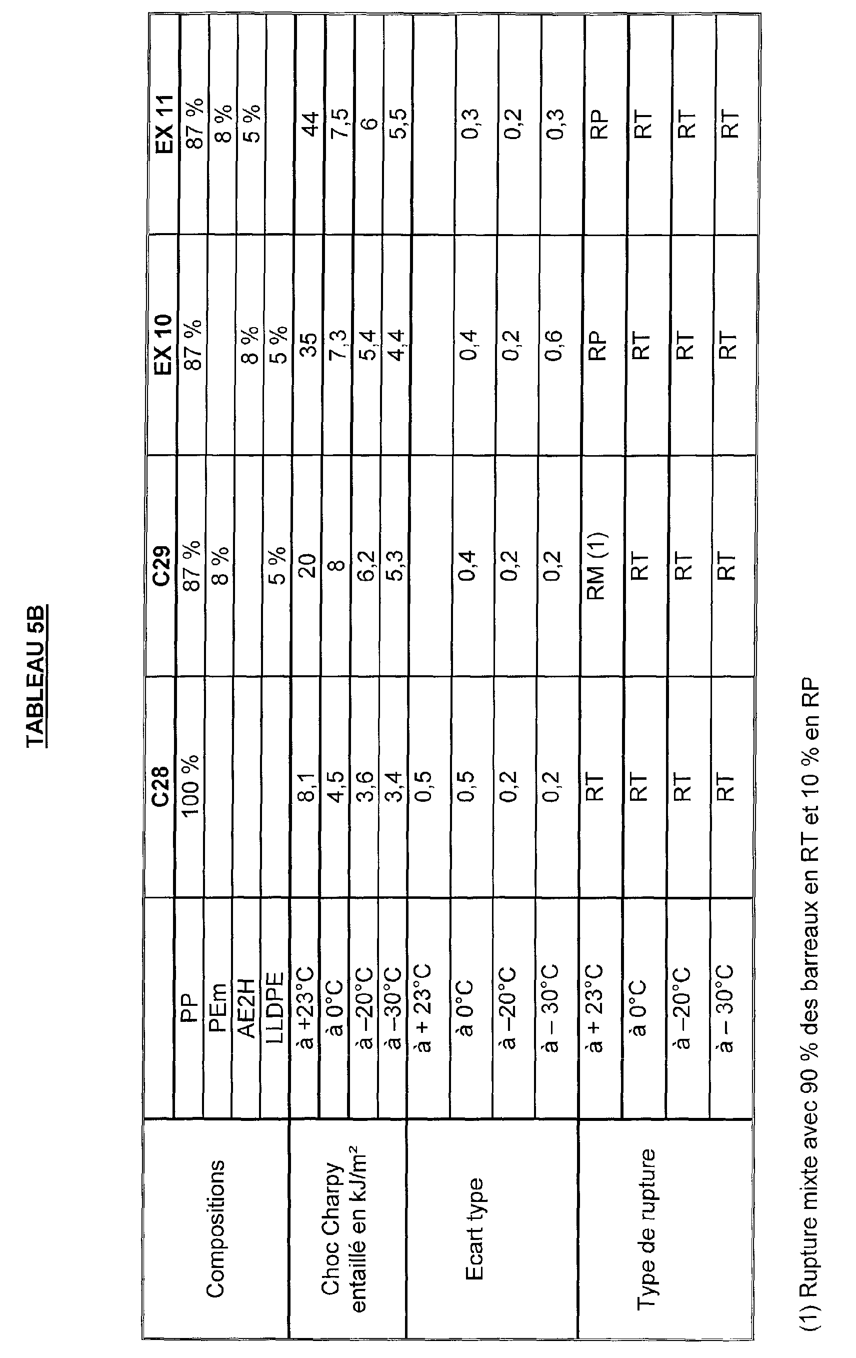

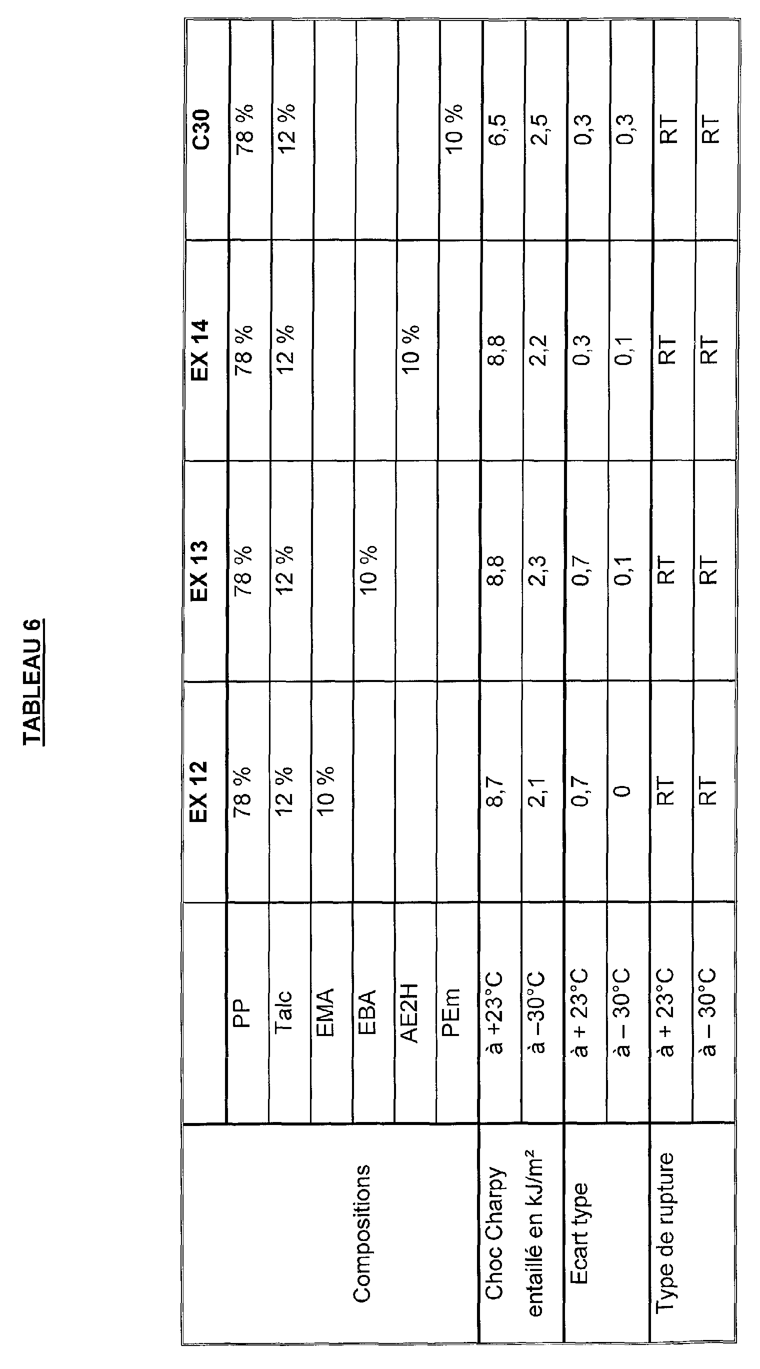

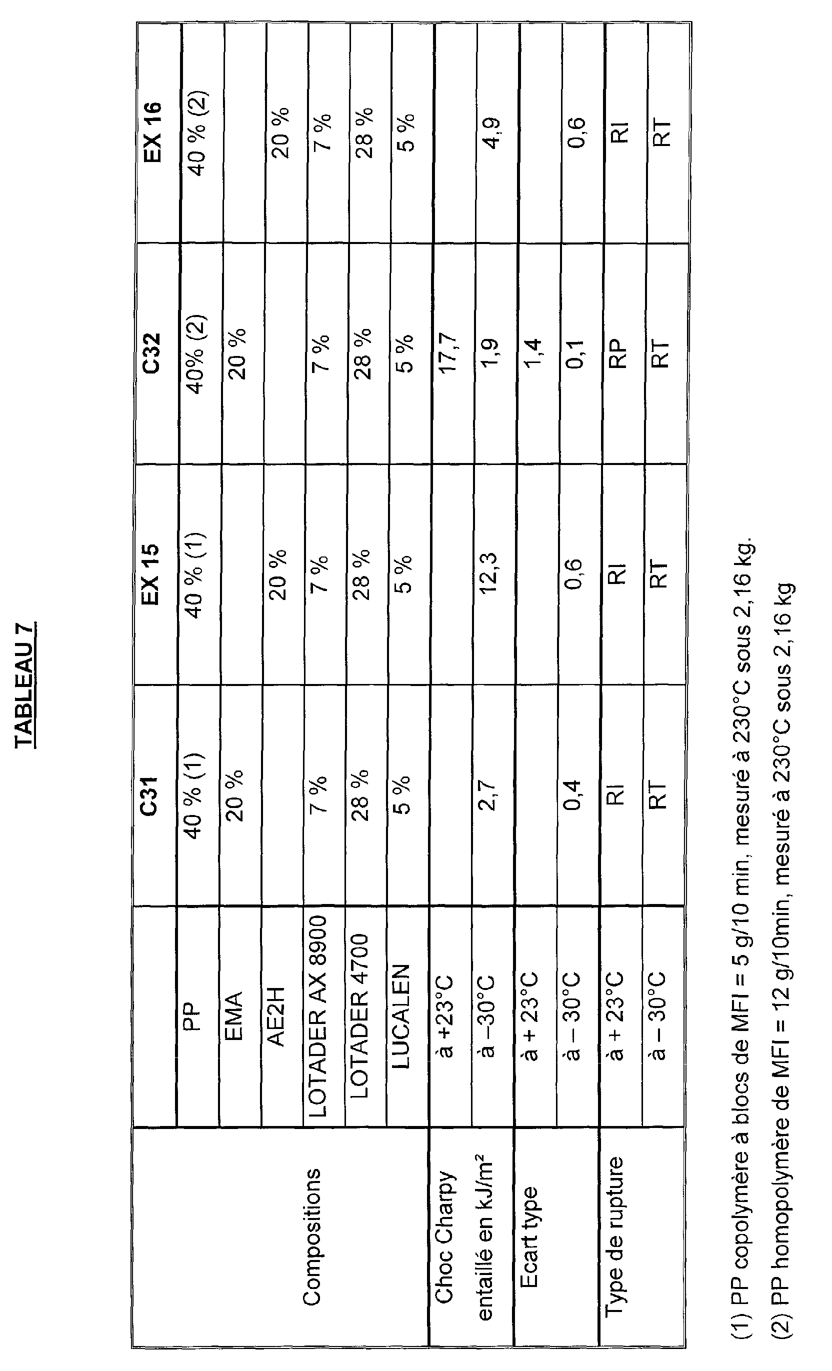

## Revendications

1. Composition comprenant du polypropylène (A), homo ou copolymère, et un copolymère en tant que modifiant choc pris dans le groupe éthylène/acrylate de 2-éthylhexyle, éthylène/acrylate de n-octyle et éthylène/acrylate de 2-éthylhexyle/acrylate de n-octyle.

2. Composition selon la revendication 1, **caractérisée en ce qu'**elle comprend au moins un polyéthylène (B) pris dans le groupe comprenant le LDPE, le HDPE, le LLDPE, le VLDPE, le polyéthylène obtenu par catalyse métallocène, les élastomères EPR et EPDM, les mélanges polyéthylène et EPR ou EPDM, les copolymères éthylène/(méth)acrylate d'alkyle et éthylène/acétate de vinyle.

3. Composition selon la revendication 2, **caractérisée en ce que** les copolymères éthylène/acétate de vinyle sont des terpolymères éthylène/acétate de vinyle/anhydride maléique.

4. Composition selon la revendication 2, **caractérisée en ce que** les copolymères éthylène/(méth)acrylate d'alkyle sont des terpolymères éthylène/(méth)acrylate d'alkyle/anhydride maléique, des terpolymères éthylène(méth) acrylate d'alkyle/méthacrylate de glycidyle ou des terpolymères éthylène/(méth)acrylate d'alkyle/acide (méth)acrylique.

5. Composition selon l'une des revendications précédentes, **caractérisée en ce qu'**elle comprend environ 1 à 60 %, de préférence 1 à 40 % en poids, de copolymère éthylène/(méth)acrylate d'alkyle.

6. Composition selon l'une des revendications précédentes, **caractérisée en ce qu'**elle comprend au moins un additif pris dans le groupe comprenant des stabilisants, des antioxydants, des plastifiants, des lubrifiants, du noir de carbone et des agents colorants.

7. Composition selon l'une des revendications précédentes, **caractérisée en ce qu'**elle comprend au moins une charge.

8. Utilisation de la composition selon l'une des revendications 1 à 7 pour fabriquer des feuilles, des membranes, des films, des bâches, des planches de bord automobiles, des tubes, des plaques et des pare-chocs.
